Europäisches Patentamt

European Patent Office

Office européen des brevets

(11) Veröffentlichungsnummer: **0 416 666 A1**

## EUROPÄISCHE PATENTANMELDUNG

(21) Anmeldenummer: 90201983.5

(51) Int. Cl.⁵: **C01B 17/06**

(22) Anmeldetag: 20.07.90

(30) Priorität: 12.08.89 DE 3926723

(43) Veröffentlichungstag der Anmeldung:
13.03.91 Patentblatt 91/11

(84) Benannte Vertragsstaaten:
DE ES SE

(71) Anmelder: **METALLGESELLSCHAFT Aktiengesellschaft**
Reuterweg 14
W-6000 Frankfurt am Main(DE)

(72) Erfinder: **Fitting, Arno, Dr.**
Heinrich-Heine-Strasse 1
W-6392 Neu-Anspach(DE)
Erfinder: **Hirsch, Martin**
Römerstrasse 7
W-6282 Friedrichsdorf(DE)

(54) **Verfahren zur Gewinnung von elementarem Schwefel aus sulfidischen Materialien, die thermisch abspaltbaren Schwefel enthalten.**

(57) Zur Gewinnung von elementarem Schwefel aus sulfidischen Materialien, die thermisch abspaltbaren Schwefel enthalten, wird das sulfidische Material in den oberen Teil eines Wirbelschichtreaktors (6) einer zirkulierenden Wirbelschicht chargiert. In den unteren Teil des Wirbelschichtreaktors (6) werden sauerstoffhaltige Gase (28) und $SO_2$-haltiges Rezirkulationsgas (32) eingeleitet, wobei die Sauerstoffmenge so bemessen wird, daß sie neben der Oxidation des Eisengehaltes der sulfidischen Materialien zur Wärmedeckung des Prozesses durch Oxidation eines Teiles des eingetragenen Schwefels zu $SO_2$ ausreicht. In der mittleren Zone des Wirbelschichtreaktors (6) erfolgt unter reduzierenden Bedingungen die Bildung von elementarem Schwefel aus sulfidischem Schwefel und $SO_2$. Im oberen Teil wird der thermisch abspaltbare Schwefel abgespalten. Aus der aus dem Reaktor austretenden Suspension (7) wird der Feststoff zum größten Teil in einem Rückführzyklon (8) abgeschieden und in den Reaktor (6) zurückgeführt. Aus dem Abgas (10) wird elementarer Schwefel (19) gewonnen, ein Teil (22) des $SO_2$-Gehaltes abgeführt und der restliche Teile wieder in den Reaktor (6) als Fluidisierungsgas (28) zurückgeführt.

EP 0 416 666 A1

EP 0 416 666 A1

## VERFAHREN ZUR GEWINNUNG VON ELEMENTAREM SCHWEFEL AUS SULFIDISCHEN MATERIALIEN, DIE THERMISCH ABSPALTBAREN SCHWEFEL ENTHALTEN

Die Erfindung betrifft ein Verfahren zur Gewinnung von elementarem Schwefel aus sulfidischen Materialien, die thermisch abspaltbaren Schwefel enthalten, wobei in einer Wirbelschicht durch oxidative Röstung von sulfidischem Schwefel die erforderliche Reaktionswärme erzeugt wird, der dampfförmige Schwefel im $SO_2$-haltigen Abgas aus der Wirbelschicht abgeführt und aus diesem abgetrennt wird, und ein Teil des $SO_2$-haltigen Gases als Trägergas in die Wirbelschicht zurückgeführt wird.

Sulfidische Materialien, die thermisch abspaltbaren Schwefel enthalten, sind z.B. Pyrit ($FeS_2$) oder Chalkopyrit ($CuFeS_2$). Beim Überschreiten der jeweiligen Dissoziationstemperatur wird unter nicht-oxidierenden Bedingungen der labile Schwefel in Dampfform abgespalten. Durch Kondensation wird der Schwefel aus dem Abgas abgeschieden. Der sulfidisch gebundene Schwefel kann in oxidierender Atmosphäre zu $SO_2$ oxidiert werden oder in reduzierender Atmosphäre ebenfalls als elementarer Schwefel verdampft werden.

Aus der deutschen Patentanmeldung M 97 88, Klasse 12i,21, bekanntgemacht am 25. September 1952, ist ein Verfahren zur Herstellung von $SO_2$ und Elementarschwefel aus Pyrit bekannt, bei dem die Behandlung des Pyrits in zwei räumlich voneinander getrennten, hintereinander geschalteten Wirbelschichtöfen mit klassischen Wirbelschichten erfolgt. Der frische Pyrit wird in die erste Wirbelschicht chargiert, in die als Fluidisierungsgas von unten das heiße $SO_2$-haltige Gas der zweiten Wirbelschicht eingeleitet wird. Das Abgas der ersten Wirbelschicht enthält den verdampften, elementaren Schwefel und $SO_2$. Das feste Material fließt aus der ersten Wirbelschicht in die zweite Wirbelschicht, in die von unten ein Gasgemisch aus 80 % $SO_2$ und 20 % $O_2$ eingeleitet wird. In der zweiten Wirbelschicht erfolgt eine nahezu vollständige Abröstung des teilentschwefelten Kieses unter Bildung von $SO_2$ und $Fe_2O_3$. Der abgeröstete Feststoff wird aus der zweiten Wirbelschicht abgezogen. Aus dem Abgas der ersten Wirbelschicht wird der elementare Schwefel durch Kondensation und Berieselung mit geschmolzenem Schwefel abgeschieden. Das $SO_2$- haltige Gas wird z.T. in die zweite Wirbelschicht zurückgeleitet und zum anderen Teil als Produktion abgeführt. Zur besseren Wärmeübertragung sind die beiden Wirbelschichten ineinander angeordnet. Bei diesem Verfahren behindert der Schwefel-Dampf in der ersten Wirbelschicht eine Bildung von elementarem Schwefel aus $SO_2$.

Aus der Deutschen Patentanmeldung M 10 077, Klasse 12i,17, bekanntgemacht am 08.01.1953, ist ein Verfahren bekannt, bei dem zwei klassische Wirbelschichten übereinander angeordnet sind, und in die obere Wirbelschicht Pyrit mit Kohlenstoff chargiert wird. Die Verfahrensführung erfolgt wie oben beschrieben, jedoch wird in der ersten Wirbelschicht durch den Kohlenstoff der $SO_2$-Gehalt des Fluidisierungsgases ganz oder teilweise zu elementarem Schwefel reduziert. Das nach der Schwefel-Kondensation in die zweite Wirbelschicht zurückgeleitete Gas enthält CO, $CO_2$ und eventuell $SO_2$. Auch bei diesem Verfahren wird die Reduktion von $SO_2$ in der ersten Wirbelschicht durch den vorhandenen Schwefel-Dampf behindert. Außerdem bilden sich $CS_2$ und COS.

Aus der GB-PS 731 527 ist ein Verfahren mit drei übereinander angeordneten, klassischen Wirbelschichten bekannt. Eisenpyrite und Kupferpyrite werden in die erste Wirbelschicht chargiert und mit heißem nicht-oxidierenden Gas aus der dritten Wirbelschicht fluidisiert. Aus dem Abgas der ersten Wirbelschicht wird der elementare Schwefel durch Kondensation gewonnen. Der Feststoff fließt durch Überlaufrohre in die zweite Wirbelschicht und wird dort mit dem von elementarem Schwefel befreiten Abgas der ersten Wirbelschicht unter Zumischung von Luft unter oxidierenden Bedingungen behandelt. Das $SO_2$-haltige Abgas der zweiten Wirbelschicht wird einer $SO_2$-Gewinnung zugeführt. Der Feststoff aus der zweiten Wirbelschicht fließt durch Fallrohre in die dritte Wirbelschicht und wird dort mit Generatorgas unter reduzierenden Bedingungen zu $Fe_3O_4$ reduziert. Bei diesem Verfahren erfolgt keine Bildung von elementa- rem Schwefel aus $SO_2$, und durch die Einleitung von Generatorgas in die erste Wirbelschicht erfolgt eine Bildung von $CS_2$, COS, $H_2S$ usw.

Der Erfindung liegt die Aufgabe zugrunde, den thermisch abspaltbaren Schwefel möglichst weitgehend auszutreiben, einen ausgetragenen Feststoff mit möglichst geringem Schwefelgehalt zu erzeugen, mög- lichst viel $SO_2$ zu elementarem Schwefel zu reduzieren, den Energieverbrauch des Prozesses zu minimieren und eine einfache Abgasbehandlung zu ermöglichen.

Die Lösung dieser Aufgabe erfolgt erfindungsgemäß dadurch, daß die Reaktion in einer zirkulierenden Wirbelschicht durchgeführt wird, das frische sulfidische Material in den oberen Teil des Reaktors der zirkulierenden Wirbelschicht chargiert wird, sauerstoffhaltige Gase und $SO_2$-haltiges Rezirkulationsgas in den unteren Teil des Reaktors eingeleitet werden, die Sauerstoffmenge so bemessen wird, daß sie neben der Oxidation des Eisengehaltes der sulfidischen Materialien zur Wärmedeckung des Prozesses durch

2

Oxidation eines Teiles des eingetragenen Schwefels zu $SO_2$ ausreicht, die Schwefel in Dampfform und $SO_2$ enthaltende Suspension aus dem oberen Teil des Reaktors abgeführt und in einen Rückführzyklon geleitet wird, dort weitgehend von Feststoffen befreit wird, die abgeschiedenen Feststoffe in den mittleren Teil des Reaktors zurückgeführt werden, aus dem gereinigten Gas der dampfförmige Schwefel kondensiert wird, und der überwiegende Teil des $SO_2$-haltigen Gases als Rezirkulationsgas in den Reaktor zurückgeführt wird, und Feststoff aus dem unteren Teil des Reaktors abgezogen wird. Die zirkulierende Wirbelschicht besteht aus dem Wirbelschichtreaktor, dem Rückführzyklon und der Rückführleitung für den im Rückführzyklon abgeschiedenen Feststoff. Das bei der Erfindung angewendete Wirbelschichtprinzip zeichnet sich dadurch aus, daß - im Unterschied zur "klassischen" Wirbelschicht, bei der eine dichte Phase durch einen deutlichen Dichtesprung von dem darüber befindlichen Gasraum getrennt ist -Verteilungszustände ohne definierte Grenzschicht im Wirbelschichtreaktor vorliegen. Ein Dichtesprung zwischen dichter Phase und darüber befindlichem Staubraum ist nicht existent; jedoch nimmt innerhalb des Reaktors die Feststoffkonzentration von unten nach oben ständig ab.

Bei der Definition der Betriebsbedingungen über die Kennzahlen von Froude und Archimedes ergeben sich die Bereiche:

$$0,1 \leq 3/4 \cdot Fr^2 \cdot \frac{\rho g}{\rho k - \rho g} \leq 10 ,$$

bzw.

$$0,01 \leq Ar \leq 100 ,$$

wobei

$$Ar = \frac{d_k^3 \cdot g (\rho k - \rho g)}{\rho g \cdot \nu^2} \quad und$$

$$Fr^2 = \frac{u^2}{g \cdot d_k}$$

sind.

Es bedeuten:

u die relative Gasgeschwindigkeit in m/sec.

Ar die Archimedes-Zahl

Fr die Froude-Zahl

$\rho$ g die Dichte des Gases in $kg/m^3$

$\rho$ k die Dichte des Feststoffteilchens in $kg/m^3$

$d_k$ den Durchmesser des kugelförmigen Teilchens in m

$\nu$ die kinematische Zähigkeit in $m^2/sec.$

g die Gravitationskonstante in $m/sec.^2$

Die mit den Gasen aus dem Wirbelschichtreaktor ausgetragenen Feststoffe werden derart in den Wirbelschichtreaktor zurückgeleitet, daß der stündliche Feststoffumlauf mindestens das 5-fache des im Wirbelschichtreaktor befindlichen Feststoffgewichtes ausmacht. Die in den unteren Teil des Wirbelschichtreaktors als Fluidisierungsgas eingeleiteten sauerstoffhaltigen Gase haben einen Sauerstoffgehalt von über 50 %. Die eingeleitete Sauerstoffmenge wird so bemessen, daß sie im unteren Teil des Wirbelschichtreaktors zur Oxidation des Eisengehaltes zu $Fe_3O_4$ und zur Oxidation eines Teiles des sulfidisch gebundenen Schwefels zu $SO_2$ ausreicht. Der Anteil des sulfidisch gebundenen Schwefels, der zu $SO_2$ oxidiert wird, muß mindestens so groß sein, daß die durch die Oxidation erzeugte Wärmemenge zur Deckung des Wärmebedarfes des Systems ausreicht. Im mittleren Teil des Wirbelschichtreaktors erfolgt eine Umsetzung von sulfidischem Eisen mit $SO_2$ zu $Fe_3O_4$ und dampfförmigem elementarem Schwefel. Die im unteren Teil zur Deckung des Wärmebedarfs erzeugte $SO_2$-Menge beträgt mindestens 15 % des eingebrachten

3

EP 0 416 666 A1

Schwefelgehaltes und ist größer als die $SO_2$-Menge, die im mittleren Teil zu elementarem Schwefel reduziert werden kann. Deshalb muß nach der Schwefelkondensation aus dem Gasstrom eine entsprechende $SO_2$-Menge abgeführt werden. Falls eine größere $SO_2$-Menge abgeführt werden soll, wird die in den unteren Teil des Wirbelschichtreaktors eingeleitete Sauerstoffmenge entsprechend erhöht. Die dann anfallende größere Wärmemenge wird abgeführt. Im oberen Teil des Wirbelschichtreaktors erfolgt dann die Abspaltung des thermisch abspaltbaren Schwefels. Der im Rückführzyklon abgeschiedene Feststoff wird in einer Höhe von über 40 % der Reaktorhöhe von unten gerechnet in den mittleren Teil des Reaktors zurückgeführt. Wenn das aufgegebene sulfidische Material neben Eisen auch NE-Metalle enthält, gelten die obigen Ausführungen sinngemäß auch für den NE-Metallgehalt. Die zirkulierende Wirbelschicht kann auch unter Druck betrieben werden.

Eine vorzugsweise Ausgestaltung besteht darin, daß das sulfidische Material mit den aus dem Rückführzyklon austretenden Gasen in einem Suspensions-Wärmeaustauscher vorgewärmt wird und danach in den oberen Teil des Reaktors chargiert wird. Die Vorwärmung kann auch in mehreren Suspensions-Wärmeaustauschern mehrstufig erfolgen. Dadurch kann ein Teil des Wärmeinhaltes des aus dem Rückführzyklon austretenden Abgases zur Deckung des Wärmebedarfs ausgenutzt werden.

Eine vorzugsweise Ausgestaltung besteht darin, daß die in dem Rezirkulationsgas zurückgeführte $SO_2$-Menge mindestens das 5-fache, vorzugsweise das 7- bis 15-fache, der stöchiometrischen Menge gemäß Reaktion 3 FeS + 2 $SO_2$ = $Fe_3O_4$ + 5 S beträgt. Durch die Kreislaufführung dieser $SO_2$-Menge erfolgt eine gute Anpassung der Reaktionsgeschwindigkeiten zwischen der Oxidation von sulfidischem Schwefel im unteren Teil des Reaktors und der Umsetzung von $SO_2$ mit sulfidischem Schwefel zu elementarem Schwefel im mittleren Teil des Reaktors, und damit eine weitgehende Erzeugung von elementarem Schwefel aus dem gebildeten $SO_2$.

Eine vorzugsweise Ausgestaltung besteht darin, daß das Rezirkulationsgas vor dem Einsatz in den Reaktor im indirekten Wärmeaustausch vorgewärmt wird. Die Vorwärmung erfolgt vorzugsweise auf eine Temperatur 600 bis 800°C. Durch diese Vorwärmung wird die Energiebilanz des Prozesses verbessert, und es muß weniger sulfidischer Schwefel zu $SO_2$ oxidiert werden.

Eine vorzugsweise Ausgestaltung besteht darin, daß die Vorwärmung in einer klassischen Wirbelschicht mit dem aus dem Reaktor der zirkulierenden Wirbelschicht ausgetragenen Feststoff erfolgt, als Fluidisierungsgas sauerstoffhaltiges Gas verwendet wird, das aufgeheizte Fluidisierungsgas als Sekundärgas durch den Reaktormantel in den unteren Teil des Reaktors eingeleitet wird, und das vorgewärmte Rezirkulationsgas in den unteren Teil des Reaktors geleitet wird. Die Vorwärmung des Rezirkulationsgases erfolgt durch indirekten Wärmeaustausch in der klassischen Wirbelschicht. Da das aufgeheizte sauerstoffhaltige Fluidisierungsgas staubhaltig ist, wird durch seine Einleitung als Sekundärgas eine Beeinträchtigung des Bodens des Reaktors vermieden. In der klassischen Wirbelschicht erfolgt eine Nachreaktion, so daß auch geringe Reste von Schwefel oxidiert werden.

Die Erfindung wird anhand eines Fließschemas näher erläutert.

Über Leitung (1) wird das thermisch abspaltbaren Schwefel enthaltende sulfidische Material in den Suspensions-Wärmeaustauscher (2) eingetragen, über Leitung (3) in eine elektrostatische Gasreinigung mit Vorabscheider (4) geleitet, dort aus dem Gasstrom abgeschieden und über Leitung (5) in den oberen Teil des Wirbelschichtreaktors (6) eingetragen. Aus dem Wirbelschichtreaktor (6) wird eine aus Feststoff und Gasen bestehende Suspension über Leitung (7) in den Abscheidezyklon (8) geleitet. Der abgeschiedene Feststoff wird über die Rückführleitung (9) in den unteren Teil des Wirbelschichtreaktors (6) zurückgeführt. Die Gase treten aus dem Rückführzyklon (8) in den Suspensions-Wärmeaustauscher (2). Die in der elektrostatischen Gasreinigung (4) abgetrennten Gase werden über Leitung (10) in den Schwefel-Kondensator (11) geleitet und dort durch indirekte Kühlung unter die Kondensationstemperatur des Schwefels gekühlt. Der flüssige Schwefel wird über Leitung (12) in einen Behälter (13) geleitet. Das Gas wird über Leitung (14) in den Schwefelwäscher (15) geleitet, und dort mit flüssigem Schwefel gewaschen, der über Pumpe (16), Leitung (17) und Leitung (18) im Kreislauf geführt wird. Über Leitung (19) wird der erzeugte Schwefel aus dem Behälter (13) abgezogen. Das von Schwefel befreite, $SO_2$-haltige Abgas wird über Leitung (20) mittels des Gebläses (21) aus dem Schwefelwäscher (15) abgezogen. Ein Teilstrom wird über Leitung (22) in die Schwefelsäure-Anlage (23) geleitet und dort zu Schwefelsäure verarbeitet, die über Leitung (24) abgezogen wird. In den restlichen Teilstrom des Abgases wird über Leitung (25) Sauerstoff eingeleitet. Ein Teilstrom des Gasgemisches wird über Leitung (26) in den Wirbelschichtkühler (27) geleitet, dort durch indirekten Wärmeaustausch aufgeheizt und über Leitung (28) als Fluidisierungsgas in den unteren Teil des Wirbelschichtreaktors (6) eingeleitet. Der andere Teilstrom des Gasgemisches wird über Leitung (29) als Fluidisierungsgas in den Wirbelschichtkühler (27) geleitet, dort im Direkten Wärmeaustausch aufgeheizt, über Leitung (30) in den Zyklonabscheider (31) geführt, dort weitgehend von mitgerissenen Feststoffen befreit und über Leitung (32) als Sekundärgas in den unteren Teil des Wirbelschichtreaktors (6) eingeleitet.

4

Der im Zyklonabscheider (31) abgeschiedene Feststoff wird über Leitung (33) in den Wirbelschichtkühler (27) zurückgeführt. Über Leitung (34) wird der aus dem Wirbelschichtreaktor (6) abgezogene Feststoff in den Wirbelschichtkühler (27) geleitet, dort gekühlt und über Leitung (35) abgeführt.

Die gestrichelt dargestellte Ausführung zeigt eine Arbeitsweise ohne Wirbelschichtkühler. In diesem Fall wird das rezirkulierte Abgas über Leitung (36) in einen Wärmeaustauscher (37) geleitet und dort durch indirketen Wärmeaustausch mit Heizgasen aufgeheizt. Die Heizgase werden durch Verbrennung von Luft (38) und Brennstoff (39) erzeugt und über Leitung (40) abgeführt. Das aufgeheizte Gas wird dann als Fluidisierungsgas über Leitung (28) in den Wirbelschichtreaktor (6) geleitet. Der aus dem Wirbelschichtreaktor (6) ausgetragene Feststoff wird über Leitung (34a) in eine wassergekühlte Schnecke (41) geleitet, dort gekühlt und über Leitung (35a) abgeführt. In die wassergekühlte Schnecke wird über Leitung (42) Wasser eingeleitet und über Leitung (43) abgezogen.


Ausführungsbeispiele

Es wurde ein Material eingesetzt, das 23,3 % Fe, 21,8 % S, 31,4 % $SiO_2$, 8,0 % $Al_2O_3$ und 2,9 % CaO enthielt. 80 % des Schwefelgehaltes lagen als $FeS_2$ und 20 % als FeS vor. Die Korngröße lag unter 0,5 mm. Der Wirbelschichtreaktor hatte einen Durchmesser von 1,1 m und eine Höhe von 15 m.


Beispiel 1

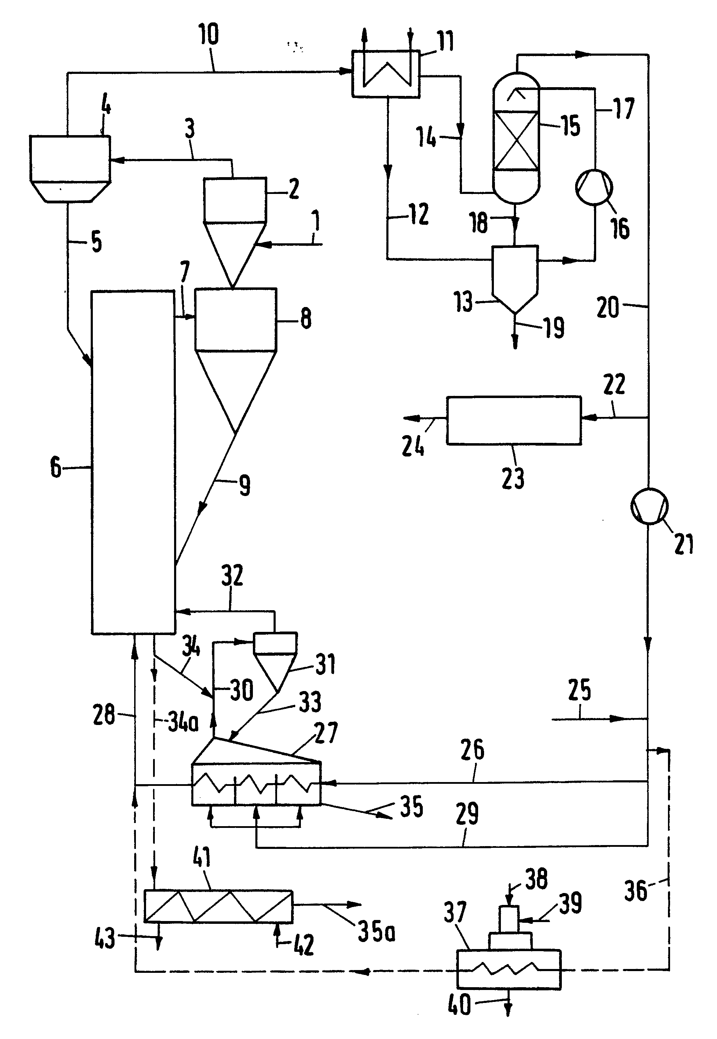

Die Arbeitsweise erfolgte gemäß der in der Figur dargestellten Ausführung mit Wirbelschichtkühler. In den Suspensions-Wärmeaustauscher wurden 6040 kg/h frisches Material eingesetzt. Die Suspension wurde mit 550 °C in die elektrostatische Gasreinigung geleitet. Das aus der elektrostatischen Gasreinigung austretende Gas enthielt 2719 $Nm^3/h$ $SO_2$ und 333 $Nm^3/h$ $S_2$. Die Abkühlung im Schwefelkondensator erfolgte auf 130 °C. Die Produktion an elementarem Schwefel betrug 950 kg/h. Der in die Schwefelsäure-Anlage geführte Teilstrom enthielt 219 $Nm^3/h$ $SO_2$. Der rezirkulierte Teilstrom enthielt 2500 $Nm^3/h$ $SO_2$. In ihn wurden 576 $Nm^3/h$ $O_2$ eingeleitet. Ein Teilstrom von 1200 $Nm^3/h$ des Gasgemisches wurde im Wirbelschichtkühler indirekt auf 500 °C aufgeheizt und in den unteren Teil des Wirbelschichtreaktors als Fluidisierungsgas eingeleitet. Der restliche Teilstrom von 1876 $Nm^3/h$ wurde als Fluidisierungsgas in den Wirbelschichtkühler geleitet und mit einer Temperatur von 800 °C als Sekundärluft in den Wirbelschichtreaktor geleitet. Der aus dem unteren Teil des Wirbelschichtreaktors abgezogene Feststoff enthielt 2 % S. Aus dem Wirbelschichtkühler wurden 5070 kg/h Feststoff mit 1 % S abgezogen. Die Temperatur im Wirbelschichtreaktor betrug 1000 °C.


Beispiel 2

Die Arbeitsweise erfolgte gemäß der in der Figur dargestellten Ausführung ohne Wirbelschichtkühler. In den Suspensions-Wärmeaustauscher wurden 6040 kg/h frisches Material eingesetzt. Die Suspension wurde mit 550 °C in die elektrostatische Gasreinigung geleitet. Das aus der elektrostatischen Gasreinigung austretende Gas enthielt 2684 $Nm^3/h$ $SO_2$ und 350 $Nm^3/h$ $S_2$. Die Abkühlung im Schwefelkondensator erfolgte auf 130 °C. Die Produktion an elementarem Schwefel betrug 1000 kg/h. Der in die Schwefelsäure-Anlage geführte Teilstrom enthielt 184 $Nm^3/h$ $SO_2$. Der rezirkulierte Teilstrom enthielt 2500 $Nm^3/h$ $SO_2$. In ihn wurden 541 $Nm^3/h$ $O_2$ eingeleitet. Das Gasgemisch wurde in dem Wärmeaustauscher durch Zufuhr von 0,9 Gcal/h durch indirekten Wärmeaustausch auf 700 °C aufgeheizt und in den Wirbelschichtreaktor als Fluidisierungsgas eingeleitet. Die Temperatur im Wirbelschichtreaktor betrug 1000 °C. Aus der wassergekühlten Schnecke wurden 5070 kg/h Feststoff mit einem Schwefelgehalt von 1 % abgezogen.

Die Vorteile der Erfindung bestehen darin, daß durch die nach oben gerichtete Propfenströmung im Wirbelschichtreaktor praktisch keine Rückmischung von Gasen im Reaktor erfolgt, und dadurch drei Zonen im Reaktor eingestellt werden können, in denen die unterschiedlichen Reaktionen getrennt voneinander durchgeführt werden können. In der unteren Oxidationszone erfolgt eine schnelle Oxidation von Eisen und sulfidischem Schwefel, wodurch der Sauerstoff in dieser Zone praktisch vollständig verbraucht wird, so daß in der mittleren Reduktionszone keine Beeinflussung der Reduktion von $SO_2$ zu elementarem Schwefel erfolgen kann. Da die thermische Abspaltung des Schwefels in der oberen Zone erfolgt, wird die Reduktion in der mittleren Zone auch nicht durch den verdampften elementaren Schwefel beeinflußt. Dadurch kann ein großer Teil des eingebrachten Schwefelgehaltes in Form von elementarem Schwefel gewonnen werden und es muß nur wenig $SO_2$ aus dem Kreislauf abgeführt werden. Andererseits ist das System sehr flexibel im Hinblick auf das gewünschte Verhältnis von erzeugtem elementaren Schwefel zu erzeugtem $SO_2$, falls eine größere $SO_2$-Menge abgeführt werden soll.

**Ansprüche**

1. Verfahren zur Gewinnung von elementarem Schwefel aus sulfidischen Materialien, die thermisch abspaltbaren Schwefel enthalten, wobei in einer Wirbelschicht durch oxidative Röstung von sulfidischem Schwefel die erforderliche Reaktionswärme erzeugt wird, der dampfförmige Schwefel im $SO_2$-haltigen Abgas aus der Wirbelschicht abgeführt und aus diesem abgetrennt wird, und ein Teil des $SO_2$-haltigen Gases als Trägergas in die Wirbelschicht zurückgeführt wird, dadurch gekennzeichnet, daß die Reaktion in einer zirkulierenden Wirbelschicht durchgeführt wird, das frische sulfidische Material in den oberen Teil des Reaktors der zirkulierenden Wirbelschicht chargiert wird, sauerstoffhaltige Gase und $SO_2$-haltiges Rezirkulationsgas in den unteren Teil des Reaktors eingeleitet werden, die Sauerstoffmenge so bemessen wird, daß sie neben der Oxidation des Eisengehaltes der sulfidischen Materialien zur Wärmedeckung des Prozesses durch Oxidation eines Teiles des eingetragenen Schwefels zu $SO_2$ ausreicht, die Schwefel in Dampfform und $SO_2$ enthaltende Suspension aus dem oberen Teil des Reaktors abgeführt und in einen Rückführzyklon geleitet wird, dort weitgehend von Feststoffen befreit wird, die abgeschiedenen Feststoffe in den mittleren Teil des Reaktors zurückgeführt werden, aus dem gereinigten Gas der dampfförmige Schwefel kondensiert wird, und der überwiegende Teil des $SO_2$-haltigen Gases als Rezirkulationsgas in den Reaktor zurückgeführt wird, und Feststoff aus dem unteren Teil des Reaktors abgezogen wird.

2. Verfahren nach Anspruch 1, dadurch gekennzeichnet, daß das sulfidische Material mit den aus dem Rückführzyklon austretenden Gasen in einem Suspensions-Wärmeaustauscher vorgewärmt wird und danach in den oberen Teil des Reaktors chargiert wird.

3. Verfahren nach Anspruch 1 oder 2, dadurch gekennzeichnet, daß die in dem Rezirkulationsgas zurückgeführte $SO_2$-Menge mindestens das 5-fache, vorzugsweise das 7- bis 15-fache, der stöchiometrischen Menge gemäß Reaktion $3 FeS + 2 SO_2 = Fe_3O_4 + 5 S$ beträgt.

4. Verfahren nach einem der Ansprüche 1 bis 3, dadurch gekennzeichnet, daß das Rezirkulationsgas vor dem Einsatz in den Reaktor im indirekten Wärmeaustausch vorgewärmt wird.

5. Verfahren nach Anspruch 4, dadurch gekennzeichnet, daß die Vorwärmung in einer klassischen Wirbelschicht mit dem aus dem Reaktor der zirkulierenden Wirbelschicht ausgetragenen Feststoff erfolgt, als Fluidisierungsgas sauerstoffhaltiges Gas verwendet wird, das aufgeheizte Fluidisierungsgas als Sekundärgas durch den Reaktormantel in den unteren Teil des Reaktors eingeleitet wird, und das vorgewärmte Rezirkulationsgas in den unteren Teil des Reaktors geleitet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 910 348 (KUSS)<br>* Spalte 1, Zeilen 53 - 70; Ansprüche 1, 3, 7, 9; Figur *<br>— — — | 1-4 | C 01 B 17/06 |
| A | DE-C-6 036 20 (BIRGER FJELD HALVORSEN)<br>* Seite 2, Zeilen 59 - 64; Ansprüche 1, 2; Figur *<br>— — — | 1,4 | |
| A | SOVIET INVENTIONS ILLUSTRATED, Section Ch, week E28, 25 Aug 1982, Derwent Publ. London GB ; no 59215 E/28<br>* Ganze Zusammenfassung & SU-A-865783 (MARKOV), 24 Jan 1980 *<br>— — — | 1 | |
| A | DE-B-1 029 352 (DUISBURGER KUPFERHUETTE)<br>— — — | | |
| A | US-A-2 872 294 (EADS)<br>— — — — — | | |

| | RECHERCHIERTE SACHGEBIETE (Int. Cl.5) |
|---|---|
| | C 01 B |

Der vorliegende Recherchenbericht wurde für alle Patentansprüche erstellt

| Recherchenort | Abschlußdatum der Recherche | Prüfer |
|---|---|---|
| Den Haag | 04 Dezember 90 | ZALM W.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument